# EUROPEAN PATENT APPLICATION

(11) **EP 4 411 134 A1**
(43) Date of publication of application: **07.08.2024**
(21) Application number: 23155023.7
(22) Date of filing: 06.02.2023
(51) Int. Cl.: F03D 1/06, F03D 7/02

(54) **ACTIVE FLAP FOR A BLADE OF A WIND TURBINE**

(71) Applicant: Siemens Gamesa Renewable Energy A/S, 7330 Brande (DK)
(72) Inventor: GRISHAUGE, Nikolai Bak, 9240 Nibe (DK); ENEVOLDSEN, Peder Bay, 7100 Vejle (DK); GONZALEZ, Alejandro Gomez, 8000 Aarhus (DK)
(74) Representative: SGRE-Association

(57) **Abstract**

The invention relates to an active flap (100) for a
blade (40) of a wind turbine. The active flap (100) comprises an upper part (10) configured to connect the active
flap (100) to an interface (20) positioned at the blade (40). The active flap (100) further comprises a lower part (12) and an adjustment means (16). The lower part (12) is configured to move relatively to the upper part (10). The adjustment means (16) is arranged in an openable cavity (38) between the upper part (10) and the lower part (12) and is configured to reversibly provoke a movement of the lower part (12). The active flap (100) further comprises a hinge part (14) configured to connect the lower part (12) to the upper part (10). The adjustment means (16) is connected to the upper
part (10). The upper part (10) comprises an extension means (34) detachably mounted to the lower part (12) and configured to open and/or close the openable cavity (38).

## Description

The present invention relates to an active flap for a blade of a turbine. The invention furthermore relates to an active flap system comprising such an active flap. Finally, the invention relates to a blade and a wind turbine.

Active flaps are aerodynamic features which can be integrated in the structure or attached as add-ons onto the trailing edge of blades, e.g. of a wind turbine. Such an active flap feature may be used to enhance the aerodynamic performance of a rotor during normal operation as well as during off-design conditions.

A drawback of the state of the art in principle is that a whole system is attached to the trailing edge section of the blade. Therefore, the serviceability of the system may be difficult, as the elements of the system may not be removable independently. Whenever a part or element of the system may need maintenance or may need to be changed, the whole system has to be removed from the blade.

Furthermore, the installation of an active flap at a trailing edge section of the blade generally needs to be very precise. Having to install a whole system with one installing step renders the installation of such an aerodynamic design even more challenging, as no adjustment may be possible.

It may be necessary to be able to modify and tailor active flaps in length and size to fit the intended purpose on a various branch of wind turbine blade designs for optimal performance and reliability. This invention discloses a novel approach of designing such an active flap for a blade of a wind turbine.

The above object is achieved by the claims. Accordingly, the problem is solved by an active flap for a blade of a wind turbine with the features of the independent claim 1, by an active flap system with the features of the subordinate claim 9, by a blade for a wind turbine with the features of the subordinate claim 11 and by a wind turbine with the features of the subordinate claim 12. Further features and details of the invention emerge from the sub claims, the description and the drawings. Features and details that are described in connection with the active flap according to the invention naturally also apply in connection with the active flap system according to the invention, the blade according to the invention and the wind turbine according to the invention and vice versa, so that with regard to the disclosure of the individual aspects of the invention, reference is or can always be made to each other.

According to a first aspect of the invention, there is provided an active flap for a blade of a wind turbine. The active flap comprises an upper part configured to connect the active flap to an interface positioned at the blade. The interface may be mechanically attached to the blade in the area of the trailing edge e.g., glued to the blade, or be an integral part of the blade design. The active flap further comprises a lower part and an adjustment means. The lower part is configured to move, in particular to rotate, relatively to the upper part. The adjustment means is arranged in an openable cavity between the upper part and the lower part and is configured to reversibly provoke a movement of the lower part. The active flap further comprises a hinge part configured to connect the lower part to the upper part. The adjustment means is connected to the upper part and to the lower part. The upper part comprises an extension means detachably mounted to the lower part and configured to open and/or close the openable cavity.

Such an active flap may enable the tailoring of the sectional aerodynamic properties of the blade and may, that way, allow a very efficient adjustment of the loads of a wind turbine by e.g. increasing or decreasing the level or aerodynamic loads.

A key aspect of the present invention is to provide a modular active flap with multiple parts. Therefore, it can advantageously provide an interchangeable aerodynamic device. The upper and the lower part may be designed and optimized separately and to address different needs of the design.

Furthermore, it is of great benefit if the parts of the active flap can be exchanged easily. For instance, during servicing, the adjustment means may be interchanged without having to change or break the upper part and the lower part. Therefore, if one part is damaged, it can be replaced independently and can be done in a simple and fast manner and therefore be more cost-effective.

Furthermore, it is of great benefit if the parts of the active flap may be designed and interchanged separately. For instance, an upgrade on the lower part can be done easily if a higher stability of the whole active flap may be needed or if, for example, the lower part may be made stiffer. Therefore, if the design must be tailored, it can be done by modifying the individual parts separately.

In the context of the present disclosure, the active flap may refer to an actuator arrangement, an aerodynamic device, an aerodynamic flap or the like. In general, the active flap may be configured to adjust or vary the aerodynamic profile of an airfoil section comprising a suction side and a pressure side, a leading edge and a trailing edge of a blade, e.g., of a wind turbine, in particular by adapting the angle at which the flow leaves the airfoil section at the trailing edge.

The active flap may be composed of four elements, the lower and the upper part, an adjustment means for inducing a movement of the lower part relative to the upper part and a hinge part allowing a movement of the lower part relative to the upper part while being attached to the upper part.

In the context of the present disclosure, the lower part and the upper part may be referred to as a lower aerodynamic and an upper aerodynamic portion, respectively. Indeed, it is noted that these two parts and in particular the lower part may be arranged at the trailing edge of the blade such as to fit with an aerodynamic design of the blade itself. In other words, the lower part may contribute to the aerodynamic design of the active flap as well as of the blade itself.

The upper part or the upper aerodynamic portion may be fixed to the blade via an interface. Such an interface may be a distinct element being connectable to the blade. Alternatively, such an interface may be part of the blade itself. For example, the blade may be designed such as to comprise such an interface.

Furthermore, the upper part and the lower part being already connected to each other via the hinge part may be fixed or clicked to the interface.

In the context of the present disclosure, the adjustment means may refer to an actuator for transferring input signals into output movement. For example, the adjustment means may be realized as hydraulic, pneumatic or purely mechanical means. The adjustment means may be realized in one or more portions. The adjustment means may aim to induce a movement, preferably a rotational movement, of the lower part relative to the upper part. The movement is however reversible. The adjustment means and therefore the lower part may be configured to be able to influence, vary or adjust the lift of the active flap and/or of the corresponding blade, wherein the lift refers to the force that a fluid exerts on an object, and in particular to its perpendicular component to the oncoming flow direction.

The movement of the lower part may have aerodynamic purpose. The movement of the lower part may be referred to as a deflection of the active flap itself. By actuating the adjustment means, different degrees of deflection of the active flap can be obtained.

Further, in the context of the present disclosure, the extension means may refer to a flexible arm, an elongation of the upper part or the like. In general, the extension means and the upper part may be a single piece. The extension means may be fixed to the lower part in a mounted state of the active flap. Whenever it is needed to exchange, repair and/or install a part of the active flap, the extension means can be released from the lower part such as to open the openable cavity. In the mounted state of the active flap, the openable cavity may be closed and the extension means may be operated such as to close the cavity and be fixed at the lower part.

It may be noted that throughout the present disclosure, a blade may be a blade of a wind turbine.

Summarizing, it is provided an improved active flap with regard to installation, serviceability, robustness, stability and modularity.

In another advantageous embodiment of the invention, the extension means of the upper part comprises a hook, and the lower part comprises a recess configured to hold the hook.

In other words, the extension means of the upper part may be designed such as to be robustly fixable at the lower part. It may therefore be advantageous to provide the extension means with a hook at its free end, such that the hook can engage in a recess of the lower part and be robustly fixed.

In order to maintain the functionality of the active flap, the openable cavity must be closed when the blade is meant to be used, that is, after installation/repair. This may be done by the use of a design feature that hooks, clicks or attaches the lower part of the active flap with the use of a hook interlocking with the extension means of the upper part. The lower part, that is, the recess of the lower part, may have the opposite geometry of the hook.

In another advantageous embodiment of the invention, the extension means and/or the hinge part is/are elastically deformable, in particular more elastically deformable than the rest of the upper part and the lower part.

It may be beneficial for the robustness and at the same time for the flexibility of the active flap to comprises an extension means and/or a hinge part, which is/are more flexible than the other parts.

In particular, the hinge part, which connects the upper lower part and the upper part, may be configured to allow a relative movement of the lower part with regard to the upper part. In particular, the hinge part may allow a movement about a rotational axis which is orientated in substantially spanwise direction of the rotor blade.

Concerning the extension means, it may preferably be elastic or flexible such as to accompany a movement of the lower part relative to the upper part while still connecting the lower part to the upper part, via the extension means.

The elastic properties of the active flap can be varied with the elasticity of the extension means.

The flexible material for the hinge part and/or for the extension means may be chosen such that the hinge part and/or the extension means bends at a predetermined load and a reversible bending movement is ensured. The reversible bending movement may be ensured due to the connection of the lower part and the adjustment means. It may be advantageous not only to rely on the stiffness/elasticity of the extension means, therefore the flap may be "actively" closable.

In comparison to the hinge part and the extension means, the upper part and the lower part may comprise rather rigid plastic.

In another advantageous embodiment of the invention, the lower part of the active flap comprises at least one stiffness-structure.

The stiffness and/or robustness of the whole active flap may be tailored by tailoring the stiffness of the lower part. Furthermore, when the lower part of the active flap is moved relative to the upper part by actuating the adjustment means, bending forces will be exerted internally in the lower part, in which case the lower part may bend in an undesired way if it does not possess enough stiffness. It may therefore be advantageous to have a means for increasing the stiffness of the lower part, in particular with respect to bending.

The lower part may hence be designed such as to comprise one or more stiffness-structure to reinforce the lower part or to render the lower part stiffer in some region of the lower part. For example, a stiffness-structure may comprise ribs reinforcing the lower part. A stiffness-structure may in general be configured to render the lower part more robust against some mechanical forces. For instance, the lower part may comprise a plurality of ribs. It is noted, that the stiffness-structure may be referred to as a structure to increase bending stiffness.

In another advantageous embodiment of the invention, the upper part comprises an interlocking-system to connect the adjustment means to the upper part.

In the context of the present disclosure, the interlocking-system may comprise one or more attachment elements. In particular, the interlocking system may comprise one or more hook-recess combination, the hook being placed on one part and the recess being placed correspondingly on the other part in order to hold the hook. In general, the interlocking system may comprise one or more male-female connectors. The male component being placed on one part, preferably on an adjustment means, and the corresponding female part being placed on the other part, preferably on the upper part.

It may be advantageous to provide more than one interlocking system. In particular, it may be advantageously provided three connection points, i.e. three interlocking systems, so that it may be easier to keep and control the position where the active flap is placed relative to the interface geometry and such that it can follow differences of the blade geometry.

Therefore, the adjustment means may be clicked into the upper part.

In another advantageous embodiment of the invention, the extension means of the upper part is at least partially reinforced with at least one fiber-structure.

In order to further customize or adjust the aerodynamic features of the blade through the active flap, the extension means may be reinforced with a fiber-structure.

In another advantageous embodiment of the invention, the hook of the extension means of the upper part comprises a ball joint.

The combination of a hook including a ball joint or a ball socket may allow to keep the active flap assembled and at the same time allow the intended deflection of the active flap, that is, the movement of the lower part without restrictions due to the relative rotation of the hook of the extension means and the recess of the lower part.

The ball joint may be arranged at the tip of the hook for interlocking the hook with the lower part. Therefore, the lower part, in particular the recess of the lower part, may comprise a corresponding design for receiving the ball joint of the hook.

In another advantageous embodiment of the invention, the adjustment means comprises an inflatable bladder.

The elastic properties and/or the ranges of deflection of the active flap can be varied with the design of the adjustment means.

According to a second aspect of the invention, there is provided an active flap system. The active flap system comprises an active flap as described hereinabove and hereinafter, and an interface configured to be fixed at the blade, in particular at the blade of a wind turbine. The upper part of the active flap is removably connected to the interface via at least one interlocking system. Advantages that have been described in detail for the active flap for a blade of a wind turbine according to the first aspect of the invention also apply to the active flap system according to the second aspect of the invention.

In other words, an active flap system may be provided which comprises an interface for rigidly fixing or connecting an active flap at a trailing edge of a blade. The interface may refer to an interface portion or interface apparatus.

In general, the interface may be irreversibly fixed to the blade, for example with glue. The interface may comprise one or more interlocking-system for fixing the upper part of the active flap. In other words, the upper part of the active flap may be clicked into the interface, which is irreversibly fixed to the blade.

The interface may be designed such as to robustly and rigidly hold or fix the upper part of the active flap. For instance, the upper part of the active flap may correspondingly comprise one or more element being part of the interlocking-system of the interface.

More concretely, the upper part may comprise three hook element which may engage or be held in recesses or the like of the interface of the active flap system.

This may be beneficial in order to be able to install the active flap at any blade. The design of the blade itself would be irrelevant for the active flap, as it would be fixed or clicked to the interface. Hence, merely the interface may need to be adapted to the blade.

In another advantageous embodiment of the invention, the active flap system as described hereinabove and hereinafter further comprises a static part attached to the lower part of the active flap. The static part is configured to be adapted for an aerodynamic parameter.

By providing such a static part, a further aerodynamic degree of freedom may be provided. The static part may be static in the sense that it may not change its position or orientation relative to the lower part. In particular, the static end may be attached to a free end of the lower part.

The static part may also be referred to as the aerodynamic tailor part or portion. The static part may be orientated with regard to the blade by a first angle. The static part may be glued to the lower part.

An aerodynamic parameter may be for example the lift or the drag of the active flap and/or of the blade.

According to a third aspect of the invention, there is provided a blade for a wind turbine comprising at least one active flap system as described hereinabove and hereinafter. Alternatively, the blade for a wind turbine comprises at least one active flap as described hereinabove and hereinafter. Advantages that have been described in detail for the active flap for a blade of a wind turbine according to the first aspect of the invention and to the active flap system according to the second aspect of the invention also apply to the blade for a wind turbine according to the third aspect of the invention.

It is conceivable that the blade is provided with one or more interlocking-systems for rigidly fixing an active flap directly at the blade. Alternatively, the blade may be equipped with an active flap system, wherein the interface of the active flap system is arranged at the blade.

Numerous active flaps or active flap systems may be arranged along the blade, i.e., along the trailing edge of the blade. The active flaps or active flap systems may be arranged directly next to each or at a small constant distance to each other (to prevent large gaps between them) along the trailing edge of the blade. Maintaining a small gap distance, e.g. 2 to 3 mm, between the active flap systems allows an easy installation that accounts for the necessary tolerances during mounting, and also to prevent that the active flaps accidentally collide with neighboring active flaps due to wrong alignment or mounting.

The active flap(s) or active flap system(s) may further be covered with an aerodynamic cover. Such an aerodynamic cover may be configured to be form fitting with the active flap and/or the active flap system and provide a smooth transition from the active flap and/or active flap system to the blade.

According to a fourth aspect of the invention there is provided a wind turbine comprising a number of blades, each being equipped with at least one active flap as described hereinabove and hereinafter or with at least one active flap system as described hereinabove and hereinafter.

Particularly, features, functions and/or elements as described above and in the following with reference to the active flap and/or the active flap system, equally apply to the blade and/or to the wind turbine as described hereinabove and in the following, and vice versa.

Embodiments of the invention are now described, by way of example only, with reference to the accompanying drawings, of which:
- Figure 1: shows an active flap of an active flap system for a blade;
- Figure 2: shows an active flap system at a blade for a wind turbine; and
- Figure 3: shows through a graphic the aerodynamic impact of an active flap.

The illustration in the drawings is in schematic form. It is noted that in different figures, similar or identical elements may be provided with the same reference signs.

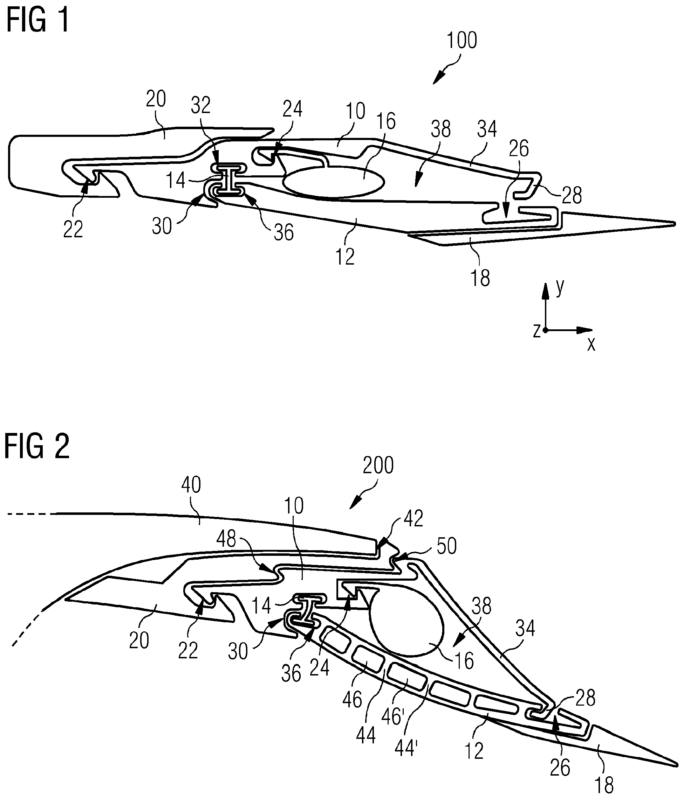

Fig. 1 shows an active flap 100 of an active flap system 200 for a blade 40, in particular for a blade of a wind turbine. In fig. 1, a coordinate system is shown for sake of clarity.

The active flap 100 of fig. 1 comprises an upper part 10 comprising one recess of an interlocking-system 24 for receiving a hook of an adjustment means 16. The adjustment means 16 may be connected to the lower part 12. Such a connection may be ensured by glue for example. The upper part 10 further comprises a hook configured to be fixed or clicked in a recess of an interlocking-system 22 of an interface 20 of an active flap system 200. Further, the upper part 10 may comprise a groove 30 allowing the lower part to pivot or rotate. The upper part 10 of fig. 1 further comprises a recess for receiving the hinge part 14. The hinge part 14 is being made mainly out of a flexible material. The hinge part 14 aims to flexibly connect the lower part 12 of the active flap to the upper part 10. Accordingly, the lower part 12 comprises a recess 36 configured to receive the hinge part 14. During the installation of the active flap on the blade 40 or on the active flap system 200, that is, on the interface of the active flap system 200, the hinge part 14 may be translated in z direction into the upper part 10 and the lower part 12.

Further, the upper part 10 comprises an extension means 34 being flexible, in particular more flexible than the rest of the upper part. It is noted that the active flap of fig. 1 is shown in an opened state. That is, before installation, the openable cavity within the adjustment means is arranged and may be open. After installation (cf. fig. 2), the hook 28 of the extension means 34 may be clicked or inserted in a recess 26 of the lower part 12 of the active flap in order to close the openable cavity.

A static part 18 of an active flap system is arranged or mounted to the lower part 12 of the active flap 100. It is however noted that the static part 18 and the lower part 12 may be one single piece.

It is noted that the parts of the active flap 100 are preferably made out of a UV-resistant material, such as ASA or TPU, or other UV-resistant modified polymer, for example.

The adjustment means 16 of the active flap 100 of fig. 1 is preferably an inflatable bladder. The adjustment means 16 may be controlled by means of injecting or removing a given volume of a gas, for example air or dry-air, which is provided via hoses that can be positioned (preferably) inside or outside of the blade. The adjustment means 16 may be controlled wirelessly or via wire by a control unit placed at the corresponding wind turbine for example. The adjustment means 16 can be controlled such as to gain volume and hence apply a pressure on the lower part 12 provoking a movement or a rotation of the lower part 12 relatively to the upper part 10.

The adjustment means 16 aims to change the geometry of the active flap 100 such as to increase or decrease the lift of the active flap 100 or of the blade 40 itself. The lift may be designated as the aerodynamic force's component, that is, perpendicular to the oncoming flow direction. In the example shown in fig. 1, the lift has a component in the y direction if the incoming flow is along the x-direction.

Such a rotational movement may be better seen from fig. 2.

Fig. 2 shows an active flap system at a blade for a wind turbine. Unless mentioned otherwise, the active flap 100 of the active flap system 200 shown in fig. 2 comprises the same elements and features as the active flap 100 described with reference to fig. 1.

The active flap 100 of the active flap system 200 of fig. 2 is in a mounted or close state. That is, the hook 28 of the extension means 34 of the upper part 10 is fixed or clicked in the recess 26 of the lower part and partially forms the openable cavity 38. Further, the adjustment means 16 of the active flap 100 shown in fig. 2 is in an inflated state. Hence, a pressure is applied on the lower part 12 and the lower part 12 has modified the whole aerodynamic profile of the active flap 100, i.e., of the trailing edge of the blade 40. The lift of the blade 40, i.e., of the active flap 100, may hence be increased.

In fig. 2, the upper part 10 is removably connected to the interface 20 of the active flap system 200 via three interlocking-systems 22, 48, 50. The interface 20 is fixed to the blade 40, in particular permanently fixed to the blade. The blade 40 may be provided with a joining surface 42 for increasing the stability of the connection between the interface 20 and the blade 40 and to ease the alignment of the interface 20 and the blade 40 during the installation process.

The interface 20 may be designed such as to fit to the design of the blade itself, or to have a certain degree of flexibility such that it can comply with small changes in the geometry of blade 40 at different positions.

The lower part 12 of the active flap 100 shown in fig. 2 comprises numerous stiffness-structures. The stiffness-structures of the lower part 12 are designed as a succession of ribs 44, 44' and holes 46, 46'.

It is noted that the interface 20, the upper part 10 and/or the lower part 12 may comprise material saving zone(s) or hole(s). Hence, by providing such zone(s) or hole(s) in those parts, a particularly light active flap 100 may be provided.

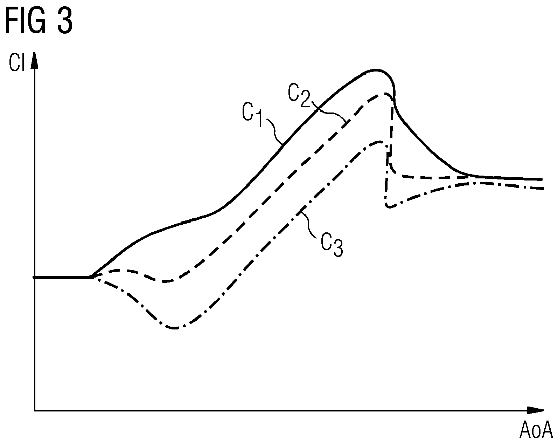

Fig. 3 shows through a graphic the aerodynamic impact of an active flap 100, e.g., an active flap 100 such as shown in fig. 1 or 2. On the horizontal axis, the angle of attack, i.e., the AoA of the blade is represented. On the vertical axis, the lift Cl is represented. Depending on the angle of attack of the blade, the active flap 100 may offer more or less lift to the blade. Furthermore, the behavior of the lift in relation to the angle of attack may change as the adjustment means 16 is actuated.

The curve C3 corresponds to a lift vs. angle of attack behavior in a state in which the adjustment means 16 is not actuated, that is, in its so-called rest or retracted state. In the case of an inflatable bladder, curve C3 would correspond to a lift behavior one could observe for a fully deflated bladder.

Curve C2 corresponds to a lift vs. angle of attack behavior in a state in which the adjustment means 16 is partially actuated, that is, in which the lower part 12 is partially rotated. Finally, curve C1 corresponds to a lift vs. angle of attack behavior in a state in which the adjustment means 16 is completely actuated, that is, the lower part 12 reaches its most inclined state or most inclined rotation. In the case of an inflatable bladder as adjustment means 16, curve C1 would correspond to a lift behavior one could observe with a fully inflated bladder.

Of course, since the movement of the lower part 12 is reversible, a continuous transition from one extreme state to the other may be observed while actuating the adjustment means 16.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. Active flap (100) for a blade (40) of a wind turbine, comprising
an upper part (10) configured to connect the active flap (100) to an interface (20) positioned at the blade (40),
a lower part (12) configured to move relatively to the upper part (10),
an adjustment means (16) arranged in an openable cavity (38) between the upper part (10) and the lower part (12), configured to reversibly provoke a movement of the lower part (12), and
a hinge part (14) configured to connect the lower part (12) to the upper part (10),
wherein the adjustment means (16) is connected to the upper part (10) and the lower part (12), and
wherein the upper part (10) comprises an extension means (34) detachably mounted to the lower part (12) and configured to open and/or close the openable cavity (38).

2. Active flap (100) according to claim 1,
wherein the extension means (34) of the upper part (10) comprises a hook (28) and the lower part (12) comprises a recess configured to hold the hook (28).

3. Active flap (100) according to any one of the preceding claims,
wherein the extension means (34) and/or the hinge part (14) is/are elastically deformable, in particular more elastically deformable than the rest of the upper part (10) and the lower part (12).

4. Active flap (100) according to any one of the preceding claims,
wherein the lower part (12) comprises at least one stiffness-structure.

5. Active flap (100) according to any one of the preceding claims,
wherein the upper part (10) comprises an interlocking-system (24) to connect the adjustment means (16) to the upper part (10).

6. Active flap (100) according to any one of the preceding claims,
wherein the extension means (34) of the upper part (10) is at least partially reinforced with at least one fiber-structure.

7. Active flap (100) according to any one of the preceding claims,
wherein the hook (28) of the extension means (34) of the upper part (10) comprises a ball joint.

8. Active flap (100) according to any one of the preceding claims, wherein the adjustment means (16) comprises an inflatable bladder.

9. Active flap system (200), comprising
an active flap (100) according to any one of the claims 1 - 8, and
an interface (20) configured to be fixed at the blade (40), wherein the upper part (10) of the active flap (100) is removably connected to the interface (20) via at least one interlocking-system (22, 48, 50).

10. Active flap system (200) according to claim 9, further comprising
a static part (18) attached to the lower part (12) of the active flap (100),
wherein the static part (18) is configured to be adapted for an aerodynamic parameter.

11. Blade for a wind turbine comprising at least one active flap system (200) according to one of the claims 9 and 10 or at least one active flap (100) according to one of the claims 1 - 8.

12. Wind turbine comprising a number of blades, each being equipped with at least one active flap (100) according to one of the claims 1 - 8 or with at least one active flap system (200) according to one of the claims 9 and 10.
